# EUROPEAN PATENT APPLICATION

(11) **EP 1 416 600 A1**
(43) Date of publication of application: **06.05.2004**
(21) Application number: 03380246.3
(22) Date of filing: 24.10.2003
(51) Int. Cl.: H02B 1/40

(54) **Wall-mounted electrical housing**

(30) Priority: 29.10.2002 ES 200202603 U
(71) Applicant: I Division Electrica S.A., 50830 Villanueva de Gallego (Zaragoza) (ES)
(72) Inventor: Montanes Ramon, Alfonso, 50830 Villanueva de Gallego (Zaragoza) (ES)
(74) Representative: Alvarez Lopez, Fernando

(57) **Abstract**

The casing has a modular structure, based on physically independent parts, endowed with rapid mounting media, so that the casing first allows its rear panel (1) to be attached to the wall and attachment of the classic omega rails (3) on to its grooved supports (2) in any required position to be undertaken, and next, with complete freedom of movement, the mounting and cabling of the electrical apparatus that said casing will house, coupling next to the rear panel (1) the sides (4), the top (5) and rear (6) covers, with respective windows (7) for the passage of the cables, and finally several modular front covers (9), with the classic access windows (10) to the mechanisms, all covered by a removable and reversible door (11), reversible as are all the elements constituting the casing.

## Description

### Object of the invention

The invention herein refers to a surface mounted casing, in other words, a non-fitted casing, of the type used as a casing for an electrical panel.

The object of the invention is to achieve a modular casing that allows the user obtain greater freedom of movement during the manipulation of the cabling and the installation of the panel, since there are no parts to the casing structure that could obstruct him/her.

### Background of the invention

A large proportion of the current casings for electrical panels on the market consist of compact assemblies for all levels of protection, that completely condition the installer's way of working, both by a predetermined positioning for the components, which on many occasions is not the most ideal for the installer, and by there existing elements of the structure which, although necessary, hinder in some of the build stages.

In an attempt to avoid these drawbacks there are also known modular casings, which allow the user greater freedom of movement and greater facility for manipulation in the different stages of work, but nevertheless these modular cabinets are structured around parts which must be mounted using a considerable number of screws, which means for the installer, in addition to the corresponding effort, a considerable loss of time for the composition of the assembly.

### Description of the invention

The surface mounted casing the invention proposes, belonging to the second of the groups previously described, in other words to the modular casings, satisfactorily resolves the aforementioned drawbacks, allows great ease of assembly and great versatility, and allows the integration of an extensive range of products and accessories currently on the market, from different manufacturers and with different structural characteristics.

For this, more specifically and in accordance with one of the characteristics of the invention, the casing is completely modular, in that it is supplied in pieces so that the installer can mount it according to his/her requirements.

The mounting between the walls of the casing is carried out via simple hooking, with the aid of complementary tongues and grooves or slots, allowing a simple and quick mounting process, practically instant.

It has also been envisaged that the base of the casing have grooved profiles or supports, which offer total versatility in the positioning of electrical apparatus.

It has also been envisaged that all of the pieces which form the casing are to be reversible in order to facilitate both their manufacture and their mounting.

The bases of the casing are attached to its lateral perimeter by the same methods as used for its own attachment, with the only proviso that the top cover is fixed in place by a pair of self-tapping screws.

The door is also reversible with regards to its hinging with the body, and the interior covers allow the varying of the interior capacity of the casing, according to the requirements in each case, these also being reversible.

The classic standardized omega rails, direct support for the apparatus, are attached to the rear panel of the casing, specifically to the grooved profiles previously mentioned, with the aid of a pair of right-angled pins, which can be coupled to the ends of the omega profile, via one of its branches, whilst via the other, the respective adjustment supports are fixed, which are the ones mounted on the rear wall of the casing and which allow adjustment of the distance of said rails with respect to the rear wall.

Finally and as a complement to the disclosed structure, provision has been made for a connection structure to be part of the casing for laterally adjacent casings or cabinets

### Description of the drawings

In order to complement the description being made and with the object of helping with a better understanding of the characteristics of the invention, in accordance with a preferred embodiment thereof, there are included as an integral part of said description, a set of drawings wherein, illustrative and non-limiting in nature, the following has been represented:

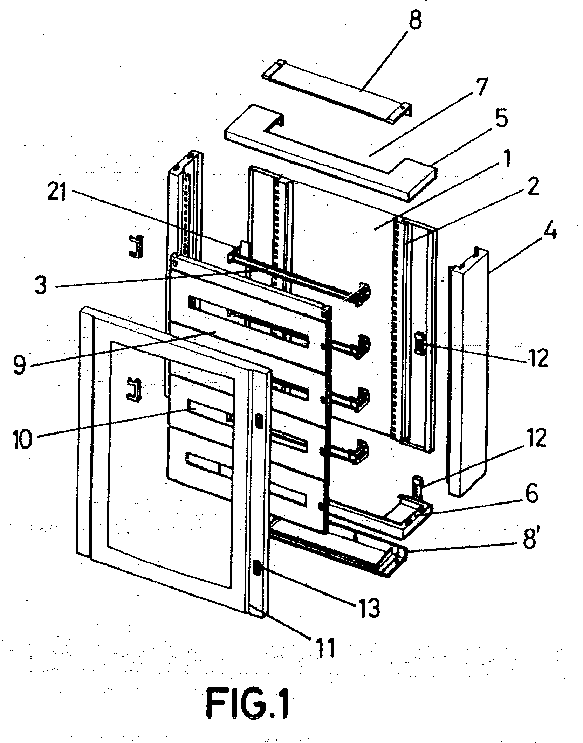

Figure 1 shows an exploded perspective of the surface mounted casing for electrical panels produced in accordance with the object of the present invention.
Figure 2 shows a partial perspective close-up of the fixing of one of the side walls of the casing to the rear wall.
Figure 3 shows a partial perspective detail of the side wall appropriately coupled to the rear wall and the sector corresponding to the top cover, exploded, in order to allow viewing of the fixing mechanisms of said cover.
Figure 4 shows an enlarged perspective close-up of one of the hinges of the front door.
Figure 5 shows a perspective close-up of the fixing mechanisms for the omega rails.
Figure 6 shows a close-up of the hanging mechanisms of the casing for hanging on a wall.
Figure 7 shows finally, and also in perspective, an adjoining casing connection.

### Preferred embodiment of the invention

In view of said figures it can be observed how the conceived surface mounted casing consists of a rear panel (1), with a lateral and vertical pair of grooved supports (2) intended for attachment, with the possibility of the height adjustment, of the omega rails (3), said base panel (1) being complemented by a pair of sides (4) with a top cover (5) and a rear cover (6), both having respective windows (8-8'), the casing closed at the front via several modular covers (9), with the classic access windows (10), and finally via a door (11) assisted by elements (12) that can act both as closures or hinges, closure elements with complementary locks (13), of the "¼ turn" type set into one of the vertical borders of the door (11), which is reversible as are the remainder of the elements that make up the casing.

As has been previously stated, at the rear (1) of the casing there are established a pair of grooved supports (2), materialised in each profile as two lines of grooves (14), dimensionally suitable to allow the insertion of grab-nuts, usually used for the fixing of accessories, at the same time as between these two lines of grooves (14), there being an intermediate line of circular die-stamps (15) that allow direct screwing to the profile, which offers maximum versatility in the placement of electrical apparatus.

The rear (1) also incorporates, in correspondence with its four vertices, several static bolts (16) for the attachment of the wall supports, as will be seen later.

The casing has initially been foreseen for attachment to the wall by the rear panel (1) only, mounting upon it the omega rails (3) and next mounting all the electrical apparatus, in a situation of maximum accessibility, and following the mounting of said apparatus proceeding to the mounting of the remaining parts of the casing, specifically the fixing of the sides (4), symmetrical as previously stated, endowed close to their upper edges with a series of hooks (17) which can be coupled to the respective die-stamps (18) in the rear of the casing, after which the sides (4) need to be subject to a small vertical displacement in a downwards direction until the joint limit situation, which is reached with a light

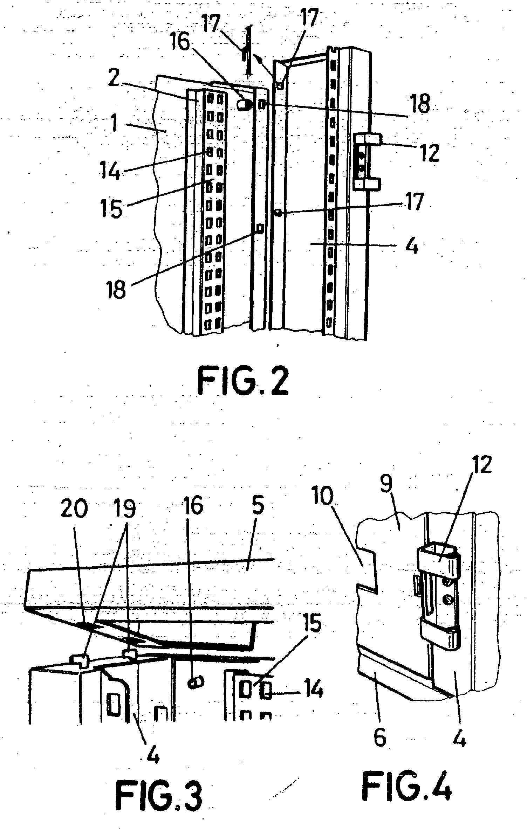

The covers (5-6) are attached next with the aid of raised flanges (19) towards the edges of the sides (4), corresponding to grooves or fixing points (20) established in the cover (5), as can be clearly seen in figure 3, an attachment that can be performed without difficulty, despite the cabling already having been carried out, due to the existence in said covers (5) and (6) of the ample windows (7) previously mentioned, whose width coincide with the length of the omega rails (3), to facilitate the distribution of the cabling, the closure of both upper and lower bases of the casing or casing being complemented with the incorporation of cable-guide lids (8), provided with an interior cut-out matrix to facilitate cutting and the passage of the insulation carrying the cables.

The modular protection covers (9) are attached to the sides of the casing in a reversible manner, with a closure system using clips and hinges, specifically on the existing grooves in the sides (4) of the casing.

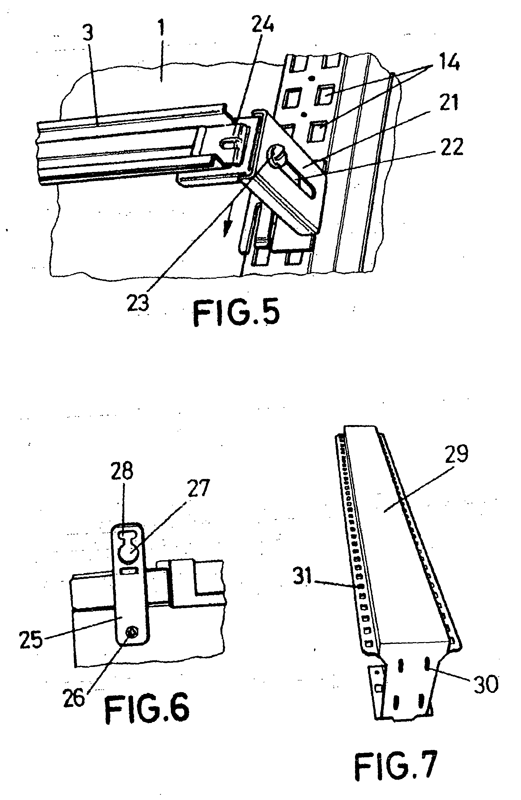

Returning once again to the omega rails (3) and as can be observed in the close-up of figure 5, said rails can be attached with any height distance between them, as well as with a different degree of distancing from the rear (1), due to the use of "L" profile adjustment supports (21), endowed at their posterior or rear branch with hooks (22) which can be plugged into any of the grooves (14) in the rear (1) of the casing, whilst on their other arm they incorporate a longitudinal groove (22) along which slides a screw (23) for attachment via a right-angled pin (24) which, via its double branch constituting the pin proper, is attached to the omega profile (3), whilst via its other branch it is attached to the support (21) using the screw (23), in any chosen position for the omega rail (3) with regards to its distance from the rear (1) of the casing.

As has been previously stated, the hinges (12) act indistinctly as both hinges or as closure elements for the door (11), and as such are located on both sides of the removable casing sides (4) allowing the mounting of said door (13) with either left or right opening.

For the hanging of the casing, an fixing part (25) is attached to the static bolts previously mentioned, via a screw (26), provided with a washer that avoids rotation thereof during tightening and which, at its free end, is finished with a hole (27) with a circular section, of sufficient diameter to allow the passage of the wall fixing screw head, and with an upper elongation (28), transversally grooved, provided so that the head of said screw lies upon it at its maximum penetration, but with the possibility of positional adjustment to correct possible deviations that can have been produced in the prior fixing of the screw to the wall.

The structure described is complemented by a connection side (29), intended to act as a bridge between two side-by-side cabinets or casings, endowed at its edges with projections (30) for its smooth joining via corresponding covers, in a similar way to that in the casings, and endowed with cut-outs at the front similar to those of the sides (4) previously mentioned, for mounting of the attachment elements for the hinges in the case of wanting to give said connection side a front door.

## Claims

1. Surface mounted casing for electrical panels of the type that incorporate a cuboid casing, with interior omega rails for the attachment of the electrical apparatus, with modular front access covers to said apparatus and with a door situated in front of said modular covers, **characterised in that** the wall of the rear of the casing, its side walls, its top and bottom covers, its modular covers and its front door are made up of physically independent parts, which are affixed according to the necessities of the installer and which are endowed with rapid assembly parts, the integral parts of the casing all being reversible in their mounting positions.

2. Surface mounted casing for electrical panels, in accordance with claim 1, **characterised in that** the rear thereof incorporates a pair of side profiles, profusely grooved, that allow maximum versatility in the placement of the "Ω" rails for the fixing of the electrical apparatus.

3. Surface mounted casing for electrical panels, according to the previous claims, **characterised in that** the sides are endowed with cleats, complementary to existing cut-outs in the rear of the casing, for coupling of said side via frontal "plugging" and light downward vertical displacement, towards a fixing limit, achieved via a click.

4. Surface mounted casing for electrical panels, according to the previous claims, **characterised in that** the sides incorporate at their edges raised flanges complementary to grooves established in both the top cover and in the rear cover, which allow the same male-female connection as the sides with respect to the rear.

5. Surface mounted casing for electrical panels, according to the previous claims, **characterised in that** the top and rear covers each incorporate an ample window open towards their rear edge, for the passage of cabling, closed by a cable-guide lid endowed in its internal face with a grid cut-out to facilitate the cutting needed to allow passage through it of the cables, said lids being screwed to the corresponding covers.

6. Surface mounted casing for electrical panels, according to the previous claims, **characterised in that** to the front edge of the sides are attached respective pairs of elements that act equally as hinge mechanisms or as closure mechanisms for the front door.

7. Surface mounted casing for electrical panels, according to the previous claims, **characterised in that** the omega rails are fixed to the rear of the casing, before the mounting thereof, with the aid of angular supports, fixed by plugging into the grooves of the side profiles of the rear, at any height level, upon whose front branch is a front-to-back sliding right-angled pin, which via its clasping branch receives the corresponding end of the omega rail, whose placement can be adjusted with respect to the stated support in order to simultaneously regulate the distance of the rail with respect to the rear of the casing.

8. Surface mounted casing for electrical panels, according to the previous claims, **characterised in that** the modular covers are of differing dimensions, allowing the varying of the capacity of the casing according to necessity, connecting to the sides of the casing, reversible in nature, via hinges and a closure clip.

9. Surface mounted casing for electrical panels, according to the previous claims, **characterised in that** the rear incorporates, in correspondence to its vertices, several fixed bolts for selective coupling of the wall fixing supports, endowed with an elongated groove for their coupling to a screw previously implanted in the wall.

10. Surface mounted casing for electrical panels, according to the previous claims, **characterised in that** with the casing proper their acts a connection side, intended for connection between casings or casings, acting as a bridge between them, endowed at its edges with raised hooks that allow the fixing of respective decorative covers, in the same way as the covers are fixed to the sides of the casing, and endowed at the front with side cut-outs for the mounting of the hinge and closure fixing elements in the case that the connection side is given a front door.

11. Surface mounted casing for electrical panels, according to the previous claims, **characterised in that** the front door is fixed to the sides of the casing in a reversible manner and can be glazed over most of its area.
